# EUROPÄISCHE PATENTSCHRIFT

(11) **EP 1 503 354 B1**
(45) Veröffentlichungstag und Bekanntmachung des Hinweises auf die Patenterteilung: **04.10.2006**
(21) Anmeldenummer: 04102538.8
(22) Anmeldetag: 04.06.2004
(51) Int. Cl.: G08G 1/09

(54) **Generierung von Verkehrshinweisen durch die Interpretation von Verkehrszeichenszenarien und Navigationsinformation in einem Fahrzeug**
Generating traffic information by interpretation of traffic sign scenarios and navigation information in a vehicle
Génération des informations routières par la interpretation des scénarios des panneaux de signalisation et des informations de navigation dans une vehicule

(30) Priorität: 30.07.2003 DE 10334620
(43) Veröffentlichungstag der Anmeldung: 02.02.2005
(73) Patentinhaber: ROBERT BOSCH GMBH, 70442 Stuttgart (DE)
(72) Erfinder: Janssen, Holger, 31840 Hessisch Oldendorf (DE)

(56) Entgegenhaltungen:
- EP-A- 1 028 387
- EP-A- 1 244 086
- DE-A- 19 938 266
- DE-A- 19 954 002
- GB-A- 2 334 700
- US-B1- 6 442 473

## Beschreibung

### Stand der Technik

Die vorliegende Erfindung betrifft das Gebiet der Telematik und der Fahrerassistenzsysteme und insbesondere ein Verfahren zur Unterstützung des Fahrers eines Fahrzeugs in aktuellen Fahrsituationen im Verkehr, bei dem Informationen über Verkehrszeichen in Synchronisation mit der aktuellen Fahrbewegung erfasst werden.

Aus der EP 1 244 086 A2 ist ein solches Verfahren bekannt. Es werden die für einen aktuell von einem Fahrzeug befahrenen Strassenabschnitt geltenden Verkehrszeichen ermittelt und dem Fahrer auf einem Display gezeigt. Dabei kommen die Daten über die Verkehrszeichen aus einer kommerziell erhältlichen Speichereinheit, die Navigationsdaten und Landkartendaten enthält.

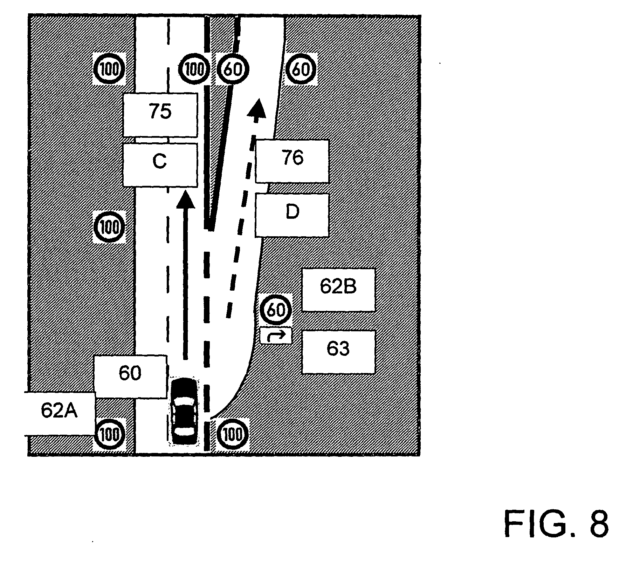

Eine pure Erkennung, also eine reine Erfassung und Darstellung von Verkehrszeichen reicht jedoch häufig nicht aus, da die Zeichen oft redundant aufgestellt werden - beispielsweise vorfahrtsregelnde Zeichen an Ampelanlagen - oder für verschiedene Fahrsituationen beachtet werden müssen oder gerade nicht - vgl. beispielsweise die Situationen in der Fig. 8. Diese gibt beispielhaft eine Situation an, in der ein Fahrzeug 60 in Situation C dem Straßenverlauf, also der Hauptfahrbahn 75 folgt und demzufolge das geschwindigkeitsregelnde Zeichen 62A, Höchstgeschwindigkeit 100 km/h gilt. Biegt das Fahrzeug auf die Abbiegespur 76 ein, so gilt das geschwindigkeitsregelnde Zeichen 62B, Höchstgeschwindigkeit von 60 km/h; dies wird unterstützt durch das Zusatzzeichen 63 "gilt nur für Rechtsabbieger". Das Verfahren nach der oben zitierten Veröffentlichung geht auf solche Probleme der Relevanzprüfung von Verkehrszeichen nicht ein. Ebenso bleiben andere wichtige Aspekte dort unberücksichtigt, etwa dass keinerlei Priorisierung der in den Verkehrszeichen codierten Informationen vorgenommen wird, etwa "Rote Ampel hat Vorrang vor Vorfahrtszeichen", oder temporär geltende Verkehrszeichen in einem Baustellenbereich.

### Vorteile der Erfindung

Im Folgenden wird auf die Patentansprüche Bezug genommen.

Mit den Maßnahmen der unabhängigen Ansprüche wird ein Verfahren bzw. System geschaffen, das den Fahrer eines Kraftfahrzeugs wirksamer in vielen problematischen Situationen unterstützt. Diese Unterstützung umfasst die Ausgabe von Hinweisen an den Fahrer und in vorteilhafter Weise in bestimmten Fällen auch das Eingreifen in die Fahrzeugsteuerung selbst und wird erfindungsgemäß dadurch erhalten, dass Informationen verschiedenen Typs und unterschiedlicher Relevanz in der aktuellen Fahrsituation automatisch erfasst oder aus einer digitalen Karte ausgelesen und programmgesteuert bewertet werden. Ein entsprechendes, an der Verkehrspraxis orientiertes Engineering von Systemausgaben an den Fahrer oder in vorteilhafter Weise sogar ein automatischer Eingriff in die Fahrzeugsteuerung unterstützt den Fahrer dadurch, dass viele nützliche Detailinformationen, die im Prinzip verfügbar sind oder leicht verfügbar gemacht werden können, aber oft dem Fahrer in einer aktuellen Fahr situation verborgen bleiben, für ihn leicht begreiflich aufbereitet werden, so dass im statistischen Durchschnitt - gebildet über Fahrsituationen auf Strassen verschiedenen Rangs, mit verschiedenen Geschwindigkeiten, mit verschiedenen Vorfahrtssituationen, verschiedenen Strassenverlaufsgeometrien, verschiedenen Fahrverläufen durch eine gegebene Geometrie, verschiedener Verkehrsdichte, verschiedenen physikalischen Umgebungsparametern, etc., dem Fahrer eine echte Unterstützung gegeben werden kann. So wird erfindungsgemäß quasi ein mitdenkender Fahrassistent auf Basis eines Computerprogramms -gespeist mit oben genannten Informationen- geschaffen, der als Schwerpunkt die Erkennung und Bewertung von Verkehrszeichen hat. Damit wird ein technischer Beitrag zu mehr Sicherheit im Strassenverkehr geschaffen. Die Wahrscheinlichkeit für Unfälle sinkt.

In den Unteransprüchen sind vorteilhafte Ausgestaltungen Weiterbildungen und Verbesserungen des jeweiligen Gegenstandes der Erfindung angegeben.

Das erfindungsgemäße Verfahren nutzt Informationen aus mehreren Informationsquellen, um die Fahrsituation, in der sich ein Fahrzeug befindet, interpretieren zu können. Dabei werden diese Informationen nach bestimmten Kriterien bewertet. Ziel der Bewertung ist es, den Fahrer zu unterstützen, dadurch, dass Verkehrshinweise erzeugt werden und gegebenenfalls weitere Maßnahmen zusätzlich vorgenommen werden.

Diese Verkehrshinweise können vom Fahrer genutzt werden, um in der Interpretation der aktuellen Verkehrssituation im Sinne einer Assistenzfunktion unterstützt zu werden. Verkehrshinweise können aber auch in vorteilhafter Weise in Funktionen verwendet werden, die direkt Aktuatoren im Fahrzeug ansteuern und somit in die Fahrzeugsteuerung eingreifen.

Für die Darstellung einer Assistenzfunktion ist es besonders vorteilhaft, wenn als Informationsquellen Informationen über Verkehrszeichen genutzt werden, weil diese im aktuellen Verkehrsgeschehen als wichtiges Mittel zur Regulierung des Verkehrs bereits überall genutzt werden und in ihnen eine breite Vielfalt von Informationen codiert ist.

Die Erzeugung von Verkehrshinweisen gelingt erfindungsgemäß durch die Bewertung und gegebenenfalls die Ergänzung von Verkehrszeicheninformationen. Dabei beruht die Bewertung auf einer:
Priorisierung von Hinweisen, wenn mehrere parallel erkannt werden.

### Zeichnungen

Anhand der Zeichnungen werden Ausführungsbeispiele der Erfindung erläutert.

Es zeigen
- Fig. 1: ein Blockschaltbild mit den wesentlichen Komponenten eines Bewertungsmoduls gemäß der Erfindung;
- Fig. 2: ein Blockschaltbild mit den wesentlichen Datenquellen für das Bewertungsmoduls gemäß der Erfindung;
- Fig. 3: ein Blockschaltbild mit den wesentlichen Datenquellen der betrachteten Navigationsinformationen;
- Fig. 4: ein Blockschaltbild mit den wesentlichen Komponenten eines Moduls zur Situationsinterpretation gemäß der Erfindung;
- Fig. 5: ein Blockdiagramm mit den wesentlichen Umfeldinformationstypen verwendet gemäß der Erfindung;
- Fig. 6: ein Blockschaltbild mit den wesentlichen Komponenten eines Fahrzeuginformationsmoduls mit den daran angeschlossenen Informationsquellen gemäß der Erfindung;
- Fig. 7 bis 11: skizzenhafte Darstellungen von Verkehrssituationen, in denen das erfindungsgemäße Verfahren selektive Verkehrshinweise gibt.

### Beschreibung von Ausführungsbeispielen

In den Figuren bezeichnen gleiche Bezugszeichen gleiche oder funktionsgleiche Komponenten.

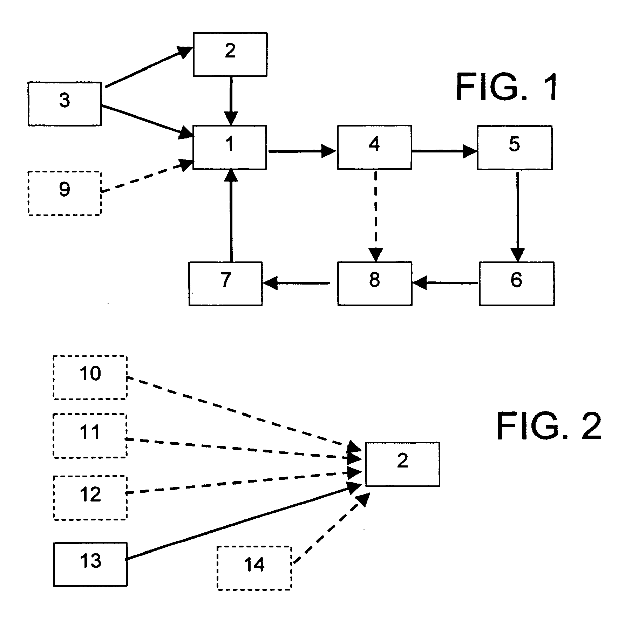

**Fig. 1** zeigt eine Übersicht über das erfindungsgemäße System, wobei sich dessen zentrale Komponente in einem Bewertungsmodul 1 wiederfindet, das die jeweilige Verkehrssituation auswertet und aus den Eingangsdaten 2,3,7 und in vorteilhafter Weise 9 Verkehrshinweise 4 generiert. Die Eingangsdaten bestehen aus Verkehrszeicheninformationen 2, Navigationsinformationen 3 eines Navigationssystems, die ebenfalls Verkehrszeichen enthalten können, Informationen über das Fahrzeug 7 und in vorteilhafter Weise verwendbare Informationen über das Fahrzeugumfeld 9.

Die Verkehrszeicheninformationen 4 werden dem Fahrer 5 in geeigneter Weise präsentiert. Der Fahrer leitet daraus seine Fahrabsicht 6 ab, die er in Handlungen an Aktuatoren 8 umsetzt. Informationen über die Aktuatoren können mithilfe der Fahrzeuginformationen 7 direkt oder indirekt gemessen werden.

Fig. 2 beschreibt die verschiedenen Quellen von Informationen über Verkehrszeichen 2. Verkehrszeicheninformationen können in der digitalen Karte 13 eines Navigationssystems enthalten sein, das erfindungsgemäß verwendet wird. In vorteilhafter Weise können Verkehrszeichen durch eine videobasierte Erfassung 10, durch Transponder an den Zeichen 11 und durch eine allgemeine Kommunikationseinrichtung 12 im Fahrzeug erkannt werden. Weiterhin besteht die Möglichkeit, die Zeicheninformation gekoppelt an eine Route 14 des Navigationssystems ähnlich wie bei der im Stand der Technik bekannten Offboard-Navigation zur Verfügung zu stellen.

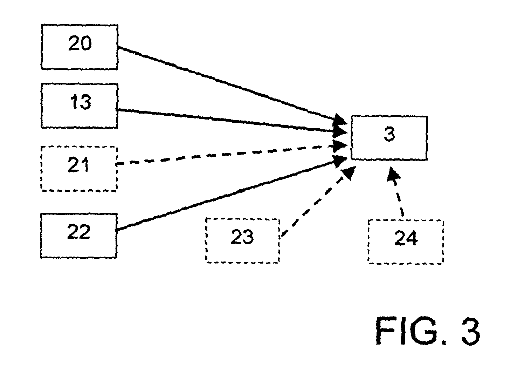

In **Fig. 3** sind die Informationsquellen der betrachteten Navigationsinformationen 3 visualisiert: Ortungsinformationen 20, Daten der digitalen Karte 13, Nationale Informationen 22 und in vorteilhafter Weise verwendbare Zusatzinformationen 21 und eine in vorteilhafter Weise verwendbare Speichereinheit 23 zur Aufnahme von Daten, die nicht im Datenbestand der digitalen Karte enthalten sein müssen. In vorteilhafter Weise stehen auch Informationen über die geplante Route 24 des Fahrzeuges von dem Navigationssystem zur Verfügung.

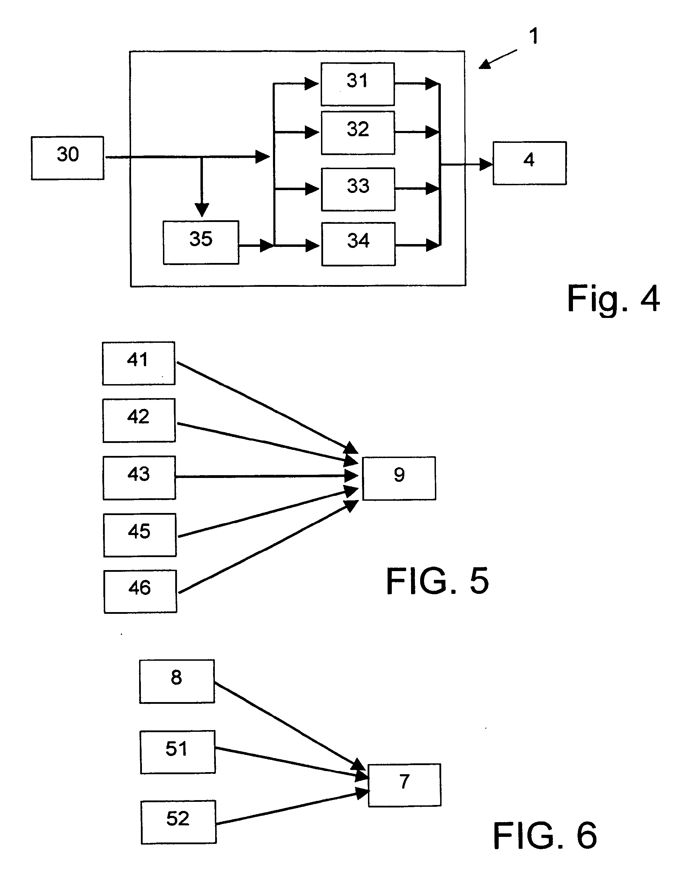

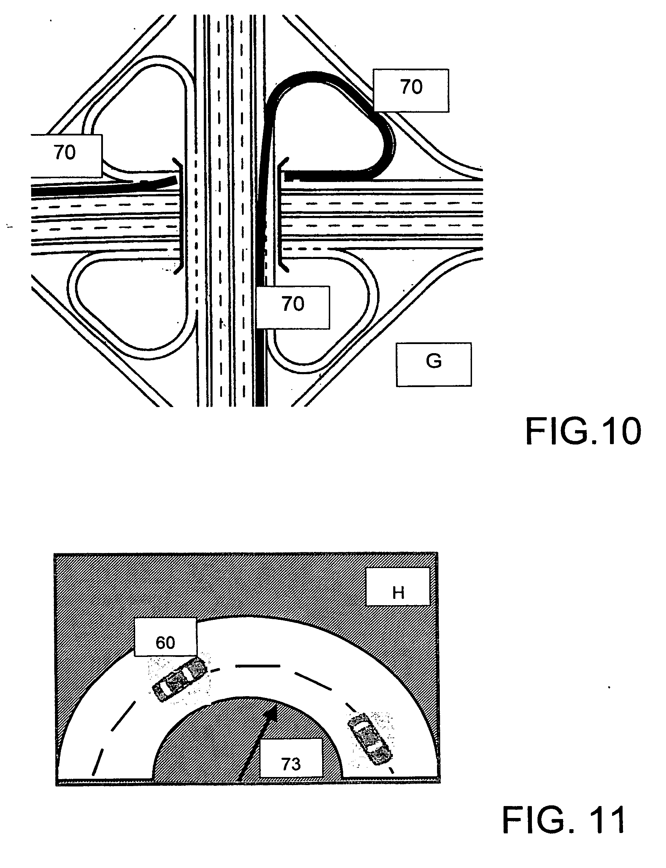

**Fig. 4** gibt den inneren Aufbau der Bestandteile des Situationsbewertungsmoduls 1 an. Die Situationsbewertung erhält Eingangsinformationen 30, die oben mit Bezug zu Fig. 1 detaillierter beschrieben sind. Aus diesen Eingangsinformationen werden Verkehrshinweise 4 erzeugt. Hierbei arbeiten eine Relevanzbewertung 31, eine Priorisierung 32, eine Geometrie und Topologie -Bewertung 33 und eine Konsistenzbewertung 34 zusammen. Es gibt zusätzlich die Möglichkeit, Informationen, die in den Eingangsdaten nicht explizit enthalten sind, durch eine Informationsgenerierung 35 zu erzeugen. Beispiel für die Erzeugung einer Information wäre eine Warnung vor einer Kurve, deren Durchfahren bei der aktuellen Fahrzeuggeschwindigkeit zu Problemen bei der Fahrdynamik führen könnte (vgl. Fig. 11), obwohl das Zeichen "Scharfe Kurve" nicht aufgestellt wurde.

Im Folgenden werden bevorzugte Details zu den erfindungsgemäß verwendeten Bewertungsprinzipien gegeben, zunächst bezüglich der Komponenten 31, 32, 33, 34, wie sie in **Fig. 4** dargestellt sind, nämlich Relevanz, der Priorisierung, der Geometrie und Topologie, sowie der Konsistenz:

Die Bewertung von Verkehrszeicheninformationen erfolgt erfindungsgemäß mit einer oder mehrerer der folgenden Komponenten, die in Fig. 4 abgebildet sind:
Ein wichtiges Kriterium ist die Bewertung der **Relevanz** 31 eines Zeichens durch die Beantwortung der Frage "gilt das Zeichen in der aktuellen Situation für das Fahrzeug" ? Mögliche Kriterien dafür sind beispielsweise:
- Gelten erkannte Vorfahrtszeichen für die aktuelle Fahrsituation aufgrund der befahrenen Straßentypen (Hauptstraße / Nebenstraße)?
- Gelten erkannte Vorschriftzeichen (beispielsweise Geschwindigkeitsbeschränkungen) aufgrund der beabsichtigten und/oder getätigten Abbiegesituation und/oder des Fahrzeugtyps (Pkw, Lkw, Fahrrad, Fußgänger, Fahrzeug mit Anhänger, Schwerlastfahrzeug, ...) und/oder der Umweltsituation ("bei Nässe") ?
- Sind bestimmte Warnzeichen ("Scharfe Kurve", "Steinschlag", "Gefälle", ...) aufgrund der aktuellen Situation zu beachten oder kann darauf verzichtet werden ?
- Gelten die aktuellen Straßenmarkierungen für in der aktuellen Situation ? Welche Straßenmarkierung ist für die aktuelle Situation relevant (Beispiel: Markierung der Rechtsabbiegespur vor einer Ampel ist relevant, wenn der Fahrer beabsichtigt rechts abzubiegen)

Ein weiteres wichtiges Kriterium für die Bewertung der Verkehrssituation ist die Priorisierung 32 der Informationen, die in Verkehrszeichen codiert sind:
Beispielsweise werden vorfahrtsregelnde Zeichen an einer Ampelanlage von der Stellung der Ampel überschrieben, d.h. die Ampel hat eine höhere Priorität. Die vorfahrtsregelnden Zeichen sind jedoch zu beachten, wenn die Ampelanlage nicht in Betrieb ist.
Auch haben Informationen, die über eine Wechselverkehrszeichenanlage angezeigt werden, eine höhere Priorität als Informationen, die über Standardverkehrszeichen (aufgestellt am Straßenrand oder in einer digitalen Karte enthalten) übermittelt werden.
Im Baustellenbereich überschreiben Baustellen-Verkehrszeichen (auch gelbe Fahrbahnmarkierungen) die sonst geltenden verkehrsregelnden Zeichen.

Zur Bewertung der Verkehrszeichen dient auch die Betrachtung der Geometrie und Topologie 33 der Straßensituation und des Fahrzeuges: "An welchem Punkt der Straßengeometrie befindet sich das Fahrzeug derzeit, ist es an einer Kreuzung bereits abgebogen, lässt die Straßengeometrie ein beabsichtigtes Abbiegen noch zu, gibt es Alternativen, die der Fahrer benutzen kann .... ?"

Die Bewertung kann auch die Konsistenz 34 der jeweiligen Informationen berücksichtigen, die von mehreren Informationsquellen 30 geliefert werden. Aus diesen Informationsquellen können in vorteilhafter Weise auch neue Informationen generiert werden, siehe Block 35, die nicht in der aktuellen Straßenbeschilderung enthalten sind.
Beispielsweise können Warnungen vor einer scharfen Kurve generiert werden, auch wenn kein Schild "Scharfe Kurve" aufgestellt ist. Siehe hierzu beispielsweise die Figuren 10 und 11. Es kann beispielsweise auch die Annäherung an einen Bahnübergang genutzt werden, um entsprechende Warnungen zu generieren. Hierzu werden beim Vorbeifahren an den vor dem Übergang aufgestellten Warnschildern entsprechende Signale transponderbasiert erzeugt.

Die oben aufgeführten Bewertungskriterien können vorteilhafterweise durch die Einbindung von aktuellen und zukünftig verfügbaren Informationen von Navigationssystemen 3 bedient werden. Ein Navigationssystem liefert bereits einen Großteil der benötigten Informationen.
Ergänzt werden können diese Informationen mit Bezug zurück zu Fig. 1 durch Sensoren zur aktuellen Fahrzeuginformation 7 und in vorteilhafter Weise verwendbaren weiteren Umfeldinformationen 9.

Das Navigationssystem verfügt dabei in Bezug zurück zu Fig. 2 mindestens über folgende Informationsquellen:
- Informationen aus einer digitalen Karte 13,
- Daten einer Ortungseinheit 20, die die Position des Fahrzeuges relativ zu der verwendeten digitalen Karte beschreibt und in vorteilhafter Weise einen Rückbezug der aktuellen Fahrzeugposition in die Ortungseinheit erlaubt (Map-Matching, Rekalibrierung des Ortungsmoduls),
- Nationale Informationen: Aktuelles Land, aktuelle Interpretationen von Verkehrsregeln in dem aktuellen Land, Nutzung der Informationen Rechts- oder Linksverkehr,

Das Navigationssystem liefert in vorteilhafter Weise folgende Informationen:
- Informationen über Verkehrszeichen (oder eine Untermenge der aufgestellten Zeichen)
- Zusatzinformationen, die über die im aktuellen technischen Stand digitaler Karten hinaus gehen, beispielsweise Kurvenradien, komplexe Kreuzungsbeschreibungen mit Abbiegegeometrien, Spurinformationen, Ampelinformationen, Vorfahrtsregelungen, Entfernungen zu Kreuzungen
- Routeninformationen: geplante Route, gefahrene Route, Abweichungen von Route, durchgeführte Abbiegevorgänge

Zur Implementierung und Realisierung der genannten, vorhandenen Informationsquellen eines Navigationssystems können neben der digitalen Karte 13 weitere Speichereinheiten 23 vorhanden sein, die durch flüchtige und permanente Speichermedien dargestellt werden können.

Verkehrszeicheninformationen 2 können erfindungsgemäß aus mehreren (auch in vorteilhafter Weise vorhandenen) Informationsquellen geliefert werden (Fig. 2):
- Verkehrszeichen sind fester oder flexibler (d.h. änderbarer) Inhalt digitaler Karten 13.
- Verkehrszeichen werden mittels eines videobasierten Verfahrens 10 erfasst.
- Verkehrszeichen werden durch eine transponderbasierte Kommunikation 11 zwischen Verkehrszeichen und Fahrzeug erfasst.
- Verkehrszeichen sind Bestandteil der Routeinformation 14, 24 eines Navigationssystems und können auch in einem Offboard-Navigationsgerät genutzt werden.
- Informationen über Verkehrszeichen können durch allgemeine Kommunikationseinrichtungen 12 dem Fahrzeug mitgeteilt werden, beispielsweise durch Fahrzeug-Fahrzeug-Kommunikation (d.h. Fahrzeuge informieren sich untereinander über Verkehrszeicheninformationen) oder Fahrzeug-Infrastruktur-Kommunikation (Fahrzeug kommuniziert mit Infrastrukturbasierten Einrichtungen (Sendemasten, Satelliten, ...)).

Alle o.g. Informationen über Verkehrszeichen 2 und/oder andere Informationsquellen 3,7,9 können in einem flüchtigen und/oder permanenten Speichermedium innerhalb und/oder außerhalb des Fahrzeuges gespeichert werden.

In **Fig. 5** sind beispielhaft Informationen aufgeführt, die das Umfeld des Fahrzeuges 9 beschreiben. Hierzu gehören Witterungsbedingungen 41, Informationen 42 über Verkehrsteilnehmer, Informationen 43 über Hindernisse 43, Information über die Straßensteigung und Neigung 44 und die aktuelle Sichtweite 45, sowie Informationen 46 über die Strassengeometrie und Spurinformationen.
Dabei enthalten die jeweiligen Informationstypen vorzugsweise folgende Detailinformationen:
- Witterungs- und Umweltinformationen 41: über Regen, Schnee, Eis, Glätte, Wind, Temperatur, Luftdruck, Luftschadstoffe, ...
- Verkehrsteilnehmer 42: über Fahrzeuge, Fußgänger, ....
- Hindernisse 43: über Infrastruktur (Leitplanken, ...), Verkehrsteilnehmer, Gebäude, sonstige (umgestürzte Bäume, herabgefallene Steine, ...)
- Steigungsinformationen 44: über Gefälle oder Steigung in der aktuellen und/oder einer zukünftigen Fahrsituation
- Straßengeometrie: beispielsweise über Fahrstreifenmarkierungen, die durch einen Videosensor erfasst werden; Spurzuordnung
- Spurinformationen: über Links-Abbieger-Spur, Rechts-Abbieger-Spur, Gerade-Aus-Spur, Bus-Spur, ....

Zu den Fahrzeuginformationen 7 gehören gemäß **Fig. 6** Informationen der Fahrzeug-Aktuatoren 8, über die Fahrzeugdynamik 51 und eine allgemeine Fahrzeugbeschreibung 52, die den Fahrzeugtyp Fahrzeuggewicht, Fahrzeuglänge, Fahrzeughöhe und die Präsenz beispielsweise eines Anhängers beinhaltet. Diese Informationen können sehr effizient eingesetzt werden, um den richtigen Hinweis in einer bestimmten Situation ausgeben zu können.

Die Fahrzeug-Informationen 7 liefern dabei genauer mindestens eine der folgenden Informationen:
- aktuelle Stellung der Fahrzeug-Aktuatoren 8 (Gas, Bremse, Bremsdruck, Motorelektronik, Lenkung, Lenkwinkel, Lenkmoment, Blinker, Licht, Fernlicht, ....)
- Daten zur Fahrzeug-Dynamik 51 (Geschwindigkeit, Raddrehzahlen, Beschleunigung in Fahrzeugrichtungen, Fahrzeugachsen, Steigungssensoren, Neigungssensoren)
- Fahrzeug-Typ 52: Pkw, Lkw, Motorrad, Moped, Fahrrad, Bus, Taxi, Straßenbahn, Wohnmobil, Gefahrguttransport, wassergefährdender Transport, Trecker, landwirtschaftliches Fahrzeug
- Fahrzeug-Geometrie, Tonnage 52: zulässiges Gewicht, aktuelles Gewicht, Höhe, Breite, Länge
- Fahrzeug-Konfiguration 52: Anhänger, Dachgepäckträger, Fahrrad auf dem Dach, Höhe Dachgepäck, Wohnwagen angehängt, etc.

Die folgenden Zeichnungen beschreiben nun beispielhaft ausgewählte Fahrsituationen, die die Einsatzbreite einer erfindungsgemäßen Situationsbewertung zur Interpretation von Verkehrszeichen aufzeigen sollen:

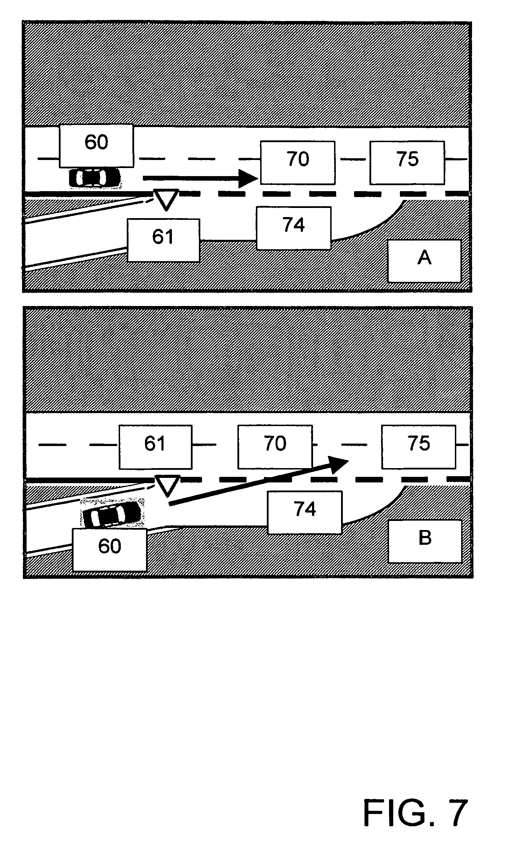

In **Fig. 7** ist das vorfahrtsregelnde Zeichen 61 so platziert, dass es vom Fahrzeug 60 in den Situationen A und B erfasst wurde. Die Interpretation der Fahrsituationen gelingt durch die gefahrene Route 70, die in der Regel mit 24, Fig. 3, übereinstimmt. Die gefahrene Strecke kann auch aus Ortungsinformation 20, Fig. 3, ermittelt werden. In Situation A ist das Zeichen "Vorfahrt gewähren" nicht relevant, da es sich auf die Beschleunigungsfahrbahn 74 bezieht, das Fahrzeug jedoch auf der Hauptfahrbahn 75 fährt. In Situation B befindet sich das Fahrzeug auf dem Beschleunigungsstreifen und das Zeichen "Vorfahrt gewähren" ist relevant.

**Fig. 8** gibt beispielhaft eine Situation an, in der das Fahrzeug 60 in Situation C dem Straßenverlauf (Hauptfahrbahn 75) folgt und demzufolge das geschwindigkeitsregelnde Zeichen 62A 100 km/h gilt. Biegt das Fahrzeug auf die Abbiegespur 76 ein, so gilt das geschwindigkeitsregelnde Zeichen 62B 60 km/h; dies wird unterstützt durch das Zusatzzeichen 63 "gilt nur für Rechtsabbieger". Die Unterscheidung in Situation C oder D erfolgt über die geplante Route 24 und/oder mit Hilfe der Ortungsinformation 20, wie oben mit Bezug zu Fig. 3 beschrieben wurde.

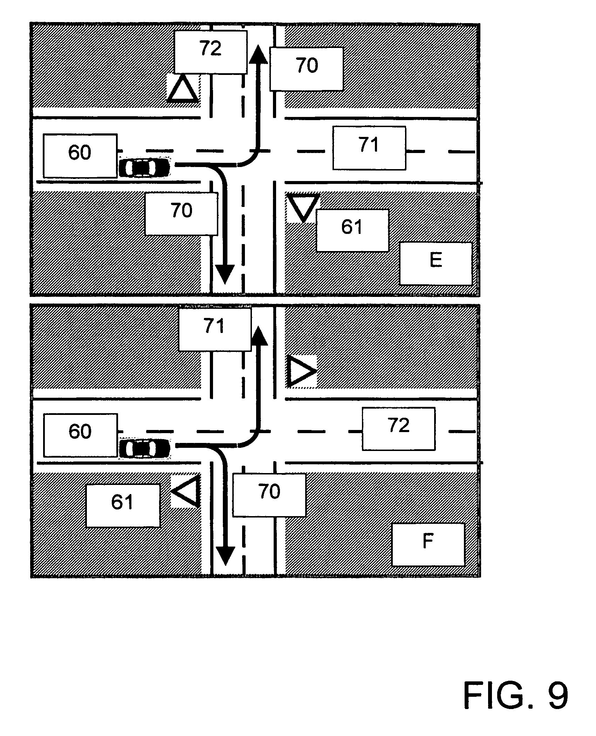

Mögliche Abbiegevorgänge E und F sind in **Fig. 9** angegeben: In Situation E biegt das Fahrzeug 60 von einer Hauptstraße 71 in eine Nebenstraße 72 ein. Die vorfahrtsregelnden Zeichen 61 gelten in Situation E nicht für das Fahrzeug.
In Situation F biegt das Fahrzeug 60 von einer Nebenstraße 72 in eine Hauptstraße 71 ein. Die vorfahrtsregelnden Zeichen 61 müssen in Situation F beachtet werden, sind also relevant.

**Fig. 10** visualisiert in Situation G das Durchfahren einer 270° Kurve auf einem Autobahnkreuz. Die geplante Route 70 ist dabei fett eingezeichnet. Dies kann beispielsweise zur Generierung von Warnungen 35 in Fig. 4 genutzt werden.

Situation H zeigt ein weiteres Beispiel für die Generierung einer Warnung in **Fig. 11**: Das Fahrzeug 60 durchfährt eine Kurve mit dem Krümmungsradius 73; ist die Fahrzeuggeschwindigkeit 51 dabei zu schnell, kann eine Warnung generiert werden.

Aus den weiter oben beschriebenen Informationen werden erfindungsgemäß gewisse weitere Kriterien zur Bewertung der aktuellen Fahrsituation und Interpretation von Verkehrszeichen abgeleitet. Die Bewertung orientiert sich dabei erfindungsgemäß an häufig auftretenden Fahrsituationen und führt zur Ableitung von Verkehrshinweisen. Es sind natürlich eine Fülle weiterer Situationen denkbar, die sich mit den obigen Informationen behandeln lassen. Nicht alle denkbaren Situationen müssen daher hier beschrieben sein. Damit gelingt erfindungsgemäß ein verallgemeinernder Ansatz, der das erfindungsgemäße Verfahren auch trotz der im Verkehr vorhandenen Komplexität breit einsetzbar macht.

Die Bewertung hat dabei vorzugsweise jeweils drei Phasen:
In Phase I steht man vor der jeweiligen Situation, in Phase II wird die Situation durchgeführt und in Phase III ist die Situation beendet, bzw. abgeschlossen.
Idealerweise sind die Bewertungen in allen 3 Phasen identisch. Dies ist beispielsweise der Fall, wenn der Fahrer der Route des Navigationssystems folgt und die Route wesentliche Informationen zur Bewertung der Situation geliefert hat. Weicht der Fahrer von der Route ab oder ergeben sich sonstige Abweichungen zwischen Realität und Plan (beispielsweise Kartenfehler) gibt es Inkonsistenzen. Um diese zu erkennen, beinhaltet das Bewertungsmodul 1 das Teilmodul zur Konsistenzbewertung.

**Bewertung von Vorfahrtsituationen** (vgl. Fig. 9):
Die Situationen lassen sich unterteilen in die Fälle
a) Vorfahrt muss gewährt werden
b) Eigenes Fahrzeug hat Vorfahrt
c) Vorfahrt nicht definiert; Fahrer geben sich z.B. per Handzeichen die Vorfahrt

Die Vorfahrt wird durch Beschilderung am Straßenrand ausgeschrieben. Die Erfassung der Vorfahrtsregelung durch visuelle Verfahren oder durch eine digitale Karte reicht oft nicht aus, da beispielsweise auch Zeichen von einmündenden Straßen erkannt werden.
Zur Bewertung der Szenerie dient die Kenntnis - visuell und/oder kartenbasiert erfasst - über den Verlauf der Vorfahrtsstraße (auch abknickende Vorfahrt, Kreisel und "rechts-vor-links" Situationen). Dies in Kombination mit der Fahrplanung (Route) und der Fahrabsicht (Blinker, Lenkeinschlag, Zuordnung zur Fahrspur "Rechtsabbieger", ...) lässt eine Bewertung der Situation vor der Durchführung zu. Entsprechende Verkehrshinweise werden in geeigneter Form an den Fahrer gegeben. Die Entfernung zur bevorstehenden Vorfahrtsituation kann als wichtiger Parameter zur Erzeugung des Verkehrshinweises herangezogen werden.

Ob der Fahrer tatsächlich Vorfahrt gewährt bekommt oder selbst Vorfahrt gewähren muss, hängt von dem Charakter der Situation (beispielsweise ist ein "Stop"-Zeichen eindeutig, ein "Vorfahrt gewähren" Zeichen kann hingegen mit aller gebotenen Vorsicht ohne Räderstillstand "überfahren" werden) und von dem Verhalten der anderen Verkehrsteilnehmer (gewähren sie tatsächlich Vorfahrt) ab.

Zur Erfassung der Verkehrsteilnehmer können Informationen über das Fahrzeugumfeld in vorteilhafter Weise vorhanden sein.

Das tatsächlich durchgeführte Fahrmanöver kann anhand von Ortung und/oder Fahrzeugtrajektorie erkannt werden und der Hinweis entsprechend angepasst werden.

### Bewertung von Einfädelungen und Ausfädelungen (vgl. Zeichnungen 7,8):

Prinzipiell ergeben sich bezüglich der Vorfahrt die gleichen Betrachtungen, wie im vorigen Punkt. Es gibt jedoch die Regel, einfädelndem Verkehr das Einfädeln leicht zu ermöglichen, indem man (falls möglich) auf eine andere freie Spur ausweicht ("Rechte Spur frei machen"). Auch das "Reißverschluss-Verfahren" ist bei dichtem Verkehr üblich. Entsprechende Verkehrshinweise können generiert werden.

Auf Einfädelungen und Ausfädelungsspuren können auch abweichend von der Hauptverkehrsrichtung andere Verkehrsregeln gelten. Vgl. Beispiel 8: 60 km/h gilt für den Abbieger in Situation D.

### Bewertung von Abbiegesituationen (Kreuzungen):

Kreuzungen sind oft eine Kombination von Vorfahrtsregelungen mit beabsichtigtem Abbiegevorgang und/oder Spurzuordnungsproblematik und/oder Ampelszenarien und/oder Abbiegespuren. Infolgedessen stellt die Bewertung eine Kombination der entsprechenden Bewertungen dar.

### Bewertung von Ampelszenarien:

Vorfahrt: siehe oben. Die Kenntnis über das Vorhandensein und die Position (z.B. Höhe über der Fahrbahn) einer Ampel kann in der digitalen Karte enthalten sein und kann dazu dienen, eine videobasierte Erfassung der Ampelstellung zu initiieren.
Bei der Bewertung von Ampelszenarien hat die Ampel Priorität vor den vorfahrtsregelnden Zeichen. Falls die Ampel ausgefallen ist, gelten die Vorfahrtszeichen. Häufig besitzen Ampelschaltungen unterschiedliche Ampelphasen für unterschiedliche Fahrtrichtungen (Rechtsabbieger, Linksabbieger, Geradeaus). Zur Auswahl der relevanten Ampelstellung können beispielsweise verwendet werden: Routeninformation, Blinkerstellung und die erfolgte Einfädelung auf einer Richtungsspur.

### Bewertung von Information zur Fahrspur:

Folgende Spurinformationen sind bei Fahrspuren beispielsweise denkbar:
- Abbiegeinformationen ("Rechtsabbieger", "Linksabbieger", ...)
- Vorschriftzeichen ("Zulässige Höchstgeschwindigkeit")
- Überholverbot (durchgezogene Linie)
- Lkw-Spur (Kriechspur, ....)
- Bus-Spur, Taxi-Spur
- Fahrrad / Fußgänger - Spur

Die Zuordnung des Fahrzeuges zu einer Spur oder das Verhalten des Fahrzeuges innerhalb einer Spur kann richtig oder falsch sein. In einigen Fällen kann dies durch Nutzung von Kontextinformation (Beispiel: Fahrzeug ist Bus) direkt entschieden werden und entsprechende Hinweise können generiert werden. Die Zuordnung zu einem beabsichtigten Abbiegemanöver kann auch durch die Betätigung des Blinkers ermittelt werden.

Bei der Bewertung von Abbiegeinformationen kann die Verwendung von Routeninformation genutzt werden und/oder ähnlich der Interpretation von Vorfahrtssituationen (siehe erstes Bewertungsbeispiel) die Situation eingeordnet werden. Berücksicht werden sollte, dass der Fahrer bewusst oder unbewusst eine falsche Abbiegespur befährt. Solange noch ausreichend Abstand zur Kreuzung besteht, können erfindungsgemäß ausgegebene Hinweise versuchen, den Fahrer auf die richtige Spur zu lenken. Wenn ein Wechseln der Spuren nicht mehr möglich ist, kann das System bereits eine Alternativroute berechnen und diese dann durch geeignete Hinweise weiterverfolgen.

### Bewertung von Zusatzzeichen:

Zusatzzeichen definieren den Gültigkeitsbereich eines Verkehrszeichena (z.B. "Bei Nässe") und/oder geben zusätzliche Information ("Abknickende Vorfahrt links").
Zusatzzeichen dienen im ersten Fall zur Bewertung des Relevanz eines Zeichens unter Zuhilfenahme von Kontextinformation - beispielsweise Ausnutzung der Umweltinformation "Regen", welche dann die Erzeugung des Verkehrshinweises ermöglicht oder unterdrückt.

Im zweiten Fall parametrieren sie das aktuelle Zeichen und können in der Regel direkt zur Erzeugung eines Verkehrshinweises genutzt werden.

### Bewertung von fahrdynamisch kritischen Situationen:

Gefahrenzeichen - beispielsweise "Achtung scharfe Rechtskurve" - werden an gefährlichen Stellen installiert unter Berücksichtigung der dort zulässigen Höchstgeschwindigkeit und normalen Fahrbahnzuständen. Ist das Fahrzeug zu schnell für die Geometrie des nächsten Fahrbahnabschnitts - ermittelt aus der Bewertung der Geometrie und/oder Topologie - oder der Fahrbahnzustand kritisch - beispielsweise nass oder vereist, .... - kann eine kritische Situation sehr viel eher entstehen. Für solche und ähnlich geartete Fälle können Verkehrshinweise erzeugt werden, siehe auch die Figuren 10 und 11.

### Bewertung von Schilderbrücken (Wechselverkehrszeichen):

Die Information auf Schilderbrücken ist angepasst an die jeweilige Situation und wird in der Regel durch Verkehrsinformationen über Verkehrsleitzentralen dynamisiert. Insofern besitzen solche Zeichen eine höhere Priorität als Standardzeichen am Straßenrand und/oder in der digitalen Karte. Dies kann zur Generierung von Verkehrshinweisen direkt verwendet werden.

Bei Schilderbrücken können sich die Hinweise auf eine bestimmte Fahrspur beziehen. Beispiele hierfür sind: Unterschiedliche Geschwindigkeitsbeschränkungen pro Spur, Spur ist gesperrt/freigegeben (Beispiele: Elbtunnel, Unfälle auf einer Spur), Spur ist für bestimmten Verkehrstyp (Lkw, Pkw) gesperrt/freigegeben (Beispiele: Kriechspur, Zollabfertigung). Um einen korrekten Hinweis zu geben, ist also eine spurgenaue Positionsbestimmung des Fahrzeuges notwendig. Diese gelingt durch hochgenaue Ortung oder videobasierte Erfassung der Fahrstreifenzuordnung und Vermessung der Schilderbrückenposition.

### Inkonsistenzen zwischen Informationsquellen:

Folgende Einflussgrößen können bei der Bewertung der Konsistenz der Verkehrssituation genutzt werden:
- Inkonsistenz zwischen Standardzeichen und dynamisierten Zeichen (Wechselzeichen auf Schilderbrücken): Auflösung erfindungsgemäß durch Priorisierung der Wechselzeichen.
- Inkonsistenz zwischen Standardzeichen und Baustellensituation (auch Fahrbahnmarkierungen in gelb): Auflösung erfindungsgemäß durch Priorisierung der Baustellenzeichen.
- Neue Vorfahrtregel ("Vorfahrt geändert"): Dies ist schwierig aufzulösen, da Information in digitaler Karte normalerweise hohe Sicherheit besitzt; Ein rechtzeitiges Kartenupdate oder Fahrzeug-Fahrzeug-Kommunikation oder beispielsweise Fahrzeug-Infrastruktur-Kommunikation kann die Inkonsistenz auflösen. Wenn sie nicht oder nur unsicher aufgelöst werden kann, so kann erfindungsgemäß ein entsprechender "Vorsicht !" -Hinweis mit allgemeinem Charakter als Auffanghinweis ausgegeben werden.
- In bestimmten Fällen kann eine Vorfahrtsregelung aus den Daten der digitalen Karte nicht extrahiert werden. Dieser Status sollte auch in geeigneter Weise und frühzeitig an der Fahrer in Form eines Verkehrshinweises kommuniziert werden.

Obwohl die vorliegende Erfindung anhand eines bevorzugten Ausführungsbeispiels vorstehend beschrieben wurde, ist sie darauf nicht beschränkt, sondern auf vielfältige Weise modifizierbar. Insbesondere können einzelne Verkehrssituationen speziell und unterschiedlich zu der vorliegenden Offenbarung bewertet und entsprechend unterschiedliche Ausgaben erzeugt werden.

Schließlich können die Merkmale der Unteransprüche im wesentlichen frei miteinander und nicht durch die in den Ansprüchen vorliegende Reihenfolge miteinander kombiniert werden, sofern sie unabhängig voneinander sind.

## Patentansprüche

1. Verfahren zur Unterstützung des Fahrers eines Fahrzeugs in aktuellen Fahrsituationen im Verkehr, bei dem Informationen über Verkehrszeichen in Synchronisation mit der aktuellen Fahrbewegung erfasst werden, mit dem Schritt
a) Erfassen von Verkehrszeicheninformationen (30A) aus wenigstens einer der folgenden Quellen:
a1) Navigationssystemen,
a2) kamera- oder videobasierte Sensorik, oder
a3) transponderbasierte Sensorik, ,
**gekennzeichnet durch die Schritte:**
b) Bewerten (1) von Verkehrszeicheninformationen (30A) für die aktuelle Fahrsituation anhand einer Priorisierung (32) von Hinweisen, wenn mehrere parallel erkannt werden,
c) Erzeugen von Verkehrshinweisen (4) aufgrund der Bewertung (1),
d) Ausgeben der Hinweise (4) zur Wahrnehmung **durch** den Fahrer.

2. Verfahren nach Anspruch 1, bei dem als Verkehrszeicheninformationen (30A) aus dem Navigationssystem eine oder mehrere der folgenden Informationen erfasst werden:
Informationen (13) aus einer oder mehreren digitalen Karten;
Daten (20) einer Ortungseinheit, die die Position des Fahrzeuges relativ zu der verwendeten digitalen Karte beschreibt;
landesspezifische Informationen.

3. Verfahren nach Anspruch 1, weiter enthaltend die Schritte:
a) Erfassen von Fahrsituationsinformationen (30B) über die aktuelle Fahrsituation zur Bildung eines Fahrsituationsmodells, wobei die Fahrsituationsinformationen (30B) fahrzeugbezogene Fahrzeuginformationen (7) oder / und Umfeldinformationen (9) enthalten,
b) Abgleichen des Fahrsituationsmodells mit Navigationsinformationen (3), die sich aus den im Navigationssystem gespeicherten Route für die aktuelle Fahrsituation ergeben.

4. Verfahren nach dem vorstehenden Anspruch, wobei
a) die Fahrzeuginformationen (7) gewählt sind aus der Gruppe:
a1) aktuelle Stellung von Fahrzeugaktuatoren (8),
a2) aktuelle Dynamikdaten (51) des Fahrzeugs,
a3) Daten (52) zur Typisierung des Fahrzeugs,
und
b) die Umfeldinformationen (9) gewählt sind aus der Gruppe:
b1) Witterungsinformationen (41),
b2) durch einen Videosensor erfasste Objekte (42, 43) in Fahrtrichtung des Fahrzeugs,
b3) Steigungs- / Gefälleinformationen (44),
b4) die aktuelle Sichtweite (45),
b4) Informationen (46) über die Strassengeometrie und Fahrspurinformationen.

5. Verfahren nach Anspruch 1, weiter enthaltend den Schritt: Generieren von zusätzlichen Hinweisen aus den Verkehrszeicheninformationen oder / und den Fahrsituationsinformationen.

6. Verfahren nach Anspruch 1, weiter enthaltend den Schritt:
Eingreifen in die Fahrdynamik des Fahrzeugs durch Betätigung vorbestimmter Aktuatoren (8), wenn sich aus der Bewertung (1) zwingend ergibt, dass sich ohne ein Eingreifen ein Unfall mit großer, vorgegebener Wahrscheinlichkeit ereignen würde.

7. Computergestütztes Fahrer-Unterstützungssystem enthaltend technische Einrichtungen (31, 32, 33, 34) zur Durchführung eines der Verfahren nach einem der vorstehenden Ansprüche.

## Claims

1. Method for supporting the driver of a vehicle in current driving situations in traffic, in which information about road signs is collected in synchronization with the current travel movement, having the step
a) collection of road sign information (30A) from at least one of the following sources:
a1) navigation systems,
a2) camera-based or video-based sensor system, or
a3) transponder-based sensor system,
**characterized by** the steps:
b) evaluation (1) of road sign information (30A) for the current travel situation by reference to a prioritization (32) of messages if a plurality are detected in parallel,
c) generation of traffic messages (4) on the basis of the evaluation (1),
d) outputting of the messages (4) to be perceived by the driver.

2. Method according to Claim 1, in which one or more of the following information items are collected as road sign information (30A) from the navigation system:
- information (13) from one or more digital maps;
- data (20) of a locating unit which describes the position of the vehicle relative to the digital map used;
- country-specific information.

3. Method according to Claim 1, further containing the steps:
a) sensing of traffic situation information (30B) about the current travel situation in order to form a travel situation model, the travel situation information (30B) containing vehicle-related vehicle information (7) and/or information (9) on the surroundings,
b) reconciliation of the travel situation model with navigation information (3) which results from the route stored in the navigation system for the current travel situation.

4. Method according to the preceding claim,
a) the vehicle information (7) being selected from the group:
a1) current position of vehicle actuators (8),
a2) current dynamic data (51) of the vehicle,
a3) data (52) for classifying the vehicle, and
b) the information (9) on the surroundings is selected from the group:
b1) weather information (41),
b2) objects (42, 43) sensed by a video sensor in the direction of travel of the vehicle,
b3) positive gradient/negative gradient information (44),
b4) the current field of vision (45),
b5) information (46) about the road geometry and lane information.

5. Method according to Claim 1, further containing the step: generation of additional messages from the road sign information and/or from the travel situation information.

6. Method according to Claim 1, further containing the step:
intervention in the travel dynamics of the vehicle by activating predetermined actuators (8) if it becomes urgently apparent from the evaluation (1) that there is a large predefined probability of an accident occurring unless there is an intervention.

7. Computer-supported vehicle support system containing technical devices (31, 32, 33, 34) for carrying out one of the methods according to one of the preceding claims.

## Revendications

1. Procédé en vue d'aider le conducteur d'un véhicule dans des situations de déplacement réelles se présentant dans le trafic, selon lequel des informations sur les panneaux de signalisation sont détectées en synchronisation avec le mouvement de déplacement réel,
comportant l'étape :
a) détection d'informations sur les panneaux de signalisation (30A) à partir d'au moins une des sources suivantes :
- a1) systèmes de navigation,
- a2) capteur basé sur une caméra ou un appareil vidéo,
- a3) capteur basé sur un transpondeur,
**caractérisé par** les étapes :
b) évaluation (1) d'informations sur les panneaux de signalisation (30A) pour la situation de déplacement réelle à l'aide d'un établissement de priorités (32) entre les indications lorsque plusieurs d'entre elles sont détectées parallèlement,
c) génération d'indications sur le trafic (4) sur la base de l'évaluation (1), et
d) émission des indications (4) en vue de leur perception par le conducteur.

2. Procédé selon la revendication 1,
dans lequel, en tant qu'informations sur les panneaux de signalisation (30A) en provenance du système de navigation, on détecte une ou plusieurs des informations suivantes :
- informations (13) provenant d'une ou plusieurs cartes numériques,
- données (20) d'une unité de repérage qui décrit la position du véhicule par rapport à la carte numérique utilisée,
- informations spécifiques au pays concerné.

3. Procédé selon la revendication 1,
comprenant en outre les étapes :
a) détection d'informations sur la situation de déplacement (30B), concernant la situation de déplacement réelle, en vue de former un modèle de situation de déplacement, lesquelles informations sur la situation de déplacement (30B) contiennent des informations relatives au véhicule (7) ou/et des informations sur l'environnement (9),
b) ajustement du modèle de situation du véhicule à l'aide d'informations sur la navigation (3) qui résultent de l'itinéraire stocké dans le système de navigation pour la situation de déplacement réelle.

4. Procédé selon la revendication précédente,
dans lequel
a) les informations sur le véhicule (7) sont choisies dans le groupe :
- a1) position réelle des actionneurs de véhicule (8),
- a2) données dynamiques réelles (51) du véhicule,
- a3) données (52) en vue du classement par type du véhicule,
et
b) les informations sur l'environnement sont choisies dans le groupe :
- b1) informations sur les conditions atmosphériques (41),
- b2) objets (42, 43) détectés par un détecteur vidéo suivant la direction de déplacement du véhicule,
- b3) informations sur la pente ascendante/descendante (44),
- b4) visibilité réelle (45),
- b5) informations (46) sur la géométrie de la route et la voie de circulation.

5. Procédé selon la revendication 1,
contenant en outre l'étape :
génération d'indications supplémentaires à partir des informations sur les panneaux de signalisation ou/et des informations sur la situation de déplacement.

6. Procédé selon la revendication 1,
contenant en outre l'étape :
intervention dans la dynamique de déplacement du véhicule par actionnement d'actionneurs prédéterminés (8) lorsque l'évaluation (1) indique de manière contraignante qu'en l'absence d'intervention un accident se produirait avec une forte probabilité prédéfinie.

7. Système d'aide au conducteur, assisté par ordinateur, contenant des dispositifs techniques (31, 32, 33, 34) en vue de réaliser un des procédés selon l'une quelconque des revendications précédentes.
